# EUROPÄISCHE PATENTSCHRIFT

(11) **EP 1 610 554 B1**
(45) Veröffentlichungstag und Bekanntmachung des Hinweises auf die Patenterteilung: **14.08.2013**
(21) Anmeldenummer: 05013081.4
(22) Anmeldetag: 17.06.2005
(51) Int. Cl.: H04N 7/18, H04N 7/10

(54) **Fahrzeug mit Bilddatensignalquellenidentifikation**
Vehicle with identification of the source of image data
Véhicule avec une identification de sources de données d'image

(30) Priorität: 24.06.2004 DE 102004030657
(43) Veröffentlichungstag der Anmeldung: 28.12.2005
(73) Patentinhaber: Magna Mirrors Holding GmbH, 63877 Sailauf (DE)
(72) Erfinder: Sigle, Marc-André, 63755 Alzenau (DE)
(74) Vertreter: Rausch, Gabriele

(56) Entgegenhaltungen:
- EP-A2- 1 077 161
- DE-U- 20 108 534
- US-A- 5 550 584
- US-A1- 2003 030 725

## Beschreibung

Die Erfindung betrifft ein Fahrzeug mit einem Videosystem bestehend aus zumindest einer Bildanzeigeeinheit und aus zumindest einer Bilddatensignalquelle nach dem Oberbegriff des Anspruchs 1.

Videosysteme in gattungsgemäßen Fahrzeugen bestehen häufig aus einer Bildanzeigeeinheit und zumindest einer Bilddatensignalquelle. Diese Bilddatensignalquelle kann beispielsweise in Form einer Überwachungskamera für den Bereich hinter dem Fahrzeug während des Rückfahrvorgangs und/oder in Form eines Navigationssystems ausgebildet sein.

Die Bilddatensignale aller Bilddatensignalquellen können jeweils einzeln oder in einer Kombination auf der zumindest einen Bildanzeigeeinheit dargestellt werden. Dazu ist es ggf. notwendig, aus der Menge der vorhandenen Bilddatensignale eine Auswahl zu treffen, die auf der Bildanzeigeeinheit zur Darstellung kommen soll. Diese Auswahl ist von der jeweiligen Situation abhängig, in der sich das Fahrzeug befindet. Wird beispielsweise der Rückfahrvorgang durch Einlegen des Rückwärtsganges eingeleitet, so wird es erforderlich, zumindest das Bilddatensignal der Rückfahrkamera auszuwählen.

Nachteilig an diesem Stand der Technik ist es, dass das Videosystem über keine Kontrollmöglichkeit verfügt, die es erlaubt zu überprüfen, ob es sich bei dem ausgewählten Bilddatensignal tatsächlich um das erwartete Bilddatensignal handelt. Damit kann die Darstellung sicherheitsrelevanter Bilddatensignale sowie das Vorliegen einer Übertragungsunterbrechung sicherheitsrelevanter Bilddatensignale nicht gewährleistet werden.

Des Weiteren ist es bei einem Videosystem mit mehreren Bilddatensignalquellen nicht möglich, die Darstellung eines unerwünschten Bilddatensignals während einer sicherheitsrelevanten Situation, insbesondere das Einblenden anderer Bildinformationen als die der Rückfahrkamera während des Rückfahrvorgangs, zu vermeiden. Es könnte nämlich versucht werden, eine weitere Bilddatensignalquelle dem Fahrzeug hinzuzufügen und mit dem Videosystem des Fahrzeugs zu verbinden oder eine Veränderung einer vorhandenen Bilddatensignalquelle herbeizuführen und eine Darstellung der Bilddatensignale der zusätzlichen oder veränderten Bilddatensignalquelle auf der Bildanzeigeeinheit zu erreichen.

Aufgabe der vorliegenden Erfindung ist es deshalb, ein Fahrzeug mit neuem Videosystem vorzuschlagen.

Diese Aufgabe wird durch ein Fahrzeug nach der Lehre des Hauptanspruchs gelöst.

Vorteilhafte Ausführungsformen der Erfindung sind Gegenstand der

Unteransprüche.

In dem erfindungsgemäßen Fahrzeug verfügt jede Bilddatensignalquelle über zumindest einen Signalgenerator. Der Signalgenerator erzeugt ein Kontrollsignal, das über einen Übertragungskanal übertragbar ist. Des Weiteren verfügt das erfindungsgemäße Fahrzeug über eine Auswerteeinheit. In der Auswerteeinheit kann das Kontrollsignal empfangen und ausgewertet werden.

Diese Konstellation bietet die Möglichkeit, die Bilddatensignale am Entstehungsort zusammen mit dem vom jeweiligen Signalgenerator erzeugten Kontrollsignal in den Übertragungskanal einzukoppeln. Die Auskopplung der Signale aus dem Übertragungskanal erfolgt in einer Umgebung der Bildanzeigeeinheit, in der sich auch die Auswerteeinheit befindet.

Somit ist die im Kontrollsignal enthaltene Information, insbesondere eine Information über die Art der Bilddatensignalquelle und/oder die Bezeichnung einer Bilddatensignalquelle, an der Position der Bildausgabeeinheit verfügbar und eine Identifizierung des Bilddatensignals mittels des Kontrollsignals möglich. Durch diese Identifizierung kann die Anzeige von sicherheitsrelevanten Bilddaten, insbesondere von Bilddaten der Rückfahrkamera während des Rückfahrvorgangs, gewährleistet werden. Des Weiteren kann eine Unterbrechung eines sicherheitsrelevanten Datenstroms auf diese Weise zuverlässig detektiert werden.

Die Art und die Positionierung der Bildanzeigeeinheit des Videosystems ist grundsätzlich beliebig. Wegen seiner kleinen Abmessungen ist die Ausbildung der Bildanzeigeeinheit als Flachbildschirm besonders geeignet. Des Weiteren ist die Wahl eines Monitors, eines Displays oder eines Projektionsgerätes als Bildanzeigeeinheit denkbar. Für die Positionierung der Bildanzeigeeinheit ist eine Position in oder nahe dem Blickfeld des Fahrers besonders vorteilhaft.

Insbesondere bei Vorhandensein verschiedener Bilddatensignalquellen ähnlicher Art, beispielsweise einer Rückfahrkamera und zumindest einer weiteren Kamera für die Überwachung eines anderen Bereichs, bietet die zusätzliche optionale Darstellung der im Kontrollsignal enthaltenen Information auf der Bildanzeigeeinheit einen weiteren Vorteil. Der Fahrer kann somit beispielsweise die Herkunft der auf der Bildanzeigeeinheit dargestellten Bilddaten direkt anhand der Kontrollsignalinformation erkennen.

Art und Anzahl der Bilddatensignalquellen des Videosystems sind grundsätzlich ohne Belang. In einer besonderen Ausführungsform ist jedoch zumindest eine Videokamera vorhanden. Diese Videokamera kann Bildaufnahmen eines von der Position des Fahrers zumindest unvollständig einsehbaren Bereichs akquirieren und somit insbesondere als Rückfahrkamera eingesetzt werden. Des Weiteren ist eine Observation des Bereichs des toten Winkels mittels der Videokamera denkbar. Weitere Ausführungsformen der Bilddatensignalquelle sind beispielsweise Navigationssysteme, Fahrerassistenzsysteme, Computer, Wiedergabegeräte, insbesondere DVD-Abspielgeräte, und Fernsehempfänger. Ebenfalls denkbar wäre, einen Anschluss für externe Videoquellen vorzusehen.

Die Bilddatensignale und Kontrollsignale müssen von ihrem jeweiligen Entstehungsort zu der Auswerteeinheit und der Bildanzeigeeinheit gelangen. Dazu ist ein Übertragungskanal erforderlich. In welcher Form dieser Übertragungskanal ausgebildet ist, ist grundsätzlich beliebig. Besonders geeignet für die Signalübertragung in einem Fahrzeug ist die Ausbildung des Übertragungskanals in Form einer kontaktbehafteten Verbindung, insbesondere in Form eines elektrischen Leiters. Diese Form bietet den Vorteil, dass vorhandene elektrische Leitungen bei Umrüstung eines alten Fahrzeugs wiederverwendet werden können und kein neuer Übertragungskanal installiert werden muss. Daher würde sich auch ein kontaktlos übertragender Übertragungskanal anbieten, z.B. die drahtlose Übertragung per Funk.

Ob die Übertragung über den Übertragungskanal analog oder digital erfolgt und ob jede Bilddatensignalquelle über einen eigenen Übertragungskanal verfügt oder alle Bilddatensignale und Kontrollsignale über einen einzigen Übertragungskanal übertragbar sind, ist grundsätzlich ohne Belang.

Wahlweise ist es auch möglich, das Bilddatensignal und/oder das Kontrollsignal verschlüsselt über den Übertragungskanal zu übertragen. Dies hat den Vorteil, dass eine funktionsfähige Veränderung des Videosystems des Fahrzeuges deutlich erschwert wird, weil zu einem funktionsfähigen Betrieb des Videosystems der Schlüssel für die verschlüsselte Übertragung bekannt sein muss.

Grundlegend für die Funktion des vorgeschlagenen Fahrzeugs ist es, dass das vom Signalgenerator erzeugte Kontrollsignal dem Bilddatensignal einer Bilddatensignalquelle eindeutig zuordenbar ist. Besonders geeignet, um diese Voraussetzung zu erfüllen, ist die Anordnung jeweils eines Signalgenerators in der näheren Umgebung jeweils einer Bilddatensignalquelle. Somit korrespondiert jeweils ein Kontrollsignal mit einem Bilddatensignal.

Ob bei Vorhandensein mehrerer Bilddatensignalquellen jede Bilddatensignalquelle über einen Signalgenerator verfügt, ist grundsätzlich beliebig. Es sollte jedoch gewährleistet sein, dass mit den Bilddaten einer sicherheitsrelevanten Bilddatensignalquelle zumindest ein Kontrollsignal korrespondiert. Um eine kompakte Bauweise zu ermöglichen und um einer Verschmutzung des Signalgenerators bei einer Anordnung außerhalb des Fahrzeuginnenraums entgegenzuwirken, kann der Signalgenerator in die zugeordnete Bilddatensignalquelle integriert werden.

Mittels der Auswerteeinheit ist das Anliegen eines Kontrollsignals an der Auswerteeinheit, insbesondere eines erwarteten Kontrollsignals, überprüfbar. Die Auswerteeinheit erhält dabei über das Vorliegen einer sicherheitsrelevanten Situation, beispielsweise des Rückfahrvorgangs, eine Information z.B. aus der Zentralsteuerung des Fahrzeugs und vergleicht diese mit dem empfangenen Kontrollsignal. Das Ergebnis des Vergleichs wird in Form eines Ergebnissignals an die Bildanzeigeeinheit weitergeleitet.

Die Darstellung auf der Bildanzeigeeinheit ist von diesem Ergebnissignal abhängig. So kann beispielsweise bei Unterbrechen des Bilddatensignalstroms der Rückfahrkamera während des Rückfahrvorgangs ein entsprechendes Ergebnissignal an die Bildanzeigeeinheit weitergeleitet werden und dort eine Fehlermeldung angezeigt werden. Des Weiteren ist mittels dieses Ergebnissignals die korrekte Anzeige eines erwarteten Bilddatensignals überprüfbar.

In einer weiteren Ausführungsform kann die Auswerteeinheit alle Bilddatensignale und Kontrollsignale empfangen und nach dem Vergleich der Kontrollsignale mit der situationsabhängigen Information das zumindest eine korrespondierende Bilddatensignal herausfiltern und an die Bildanzeigeeinheit weiterleiten.

In allen Ausführungsformen der Auswerteeinheit kann diese räumlich getrennt von der Bildanzeigeeinheit angeordnet sein oder aber in die Bildanzeigeeinheit integriert sein. Die integrierte Anordnung bietet eine kompaktere Bauweise und kürzere Übertragungsstecken zwischen der Auswerteeinheit und der Bildanzeigeeinheit.

Der Übertragungsstandard der Bilddatensignale und Kontrollsignale über den Übertragungskanal ist grundsätzlich ohne Belang. Als besonders vorteilhaft erweist sich jedoch die Übertragung in Form des FBAS-Übertragungsstandards oder einer diesem Übertragungsstandard ähnlichen Form. Dieser Übertragungsstandard kommt nämlich mit nur einem Übertragungskanal für alle Farbkomponenten aus. Des Weiteren ist es in diesem Übertragungsstandard möglich, zusätzlich ein Kontrollsignal über denselben Übertragungskanal zu übertragen.

Um die Übertragung von Bilddatensignal und Kontrollsignal über den Übertragungskanal zu organisieren, kann zwischen Bilddatensignalquelle, Signalgenerator und Übertragungskanal ein Signalverbindungselement angeordnet werden. Dieses Signalverbindungselement organisiert die Datenübertragung nach einem bestimmten Schema. Die Ausbildung des Signalverbindungselements ist grundsätzlich beliebig. Besonders vorteilhaft ist es jedoch, das Signalverbindungselement in Form eines bekannten integrierten Schaltkreises, insbesondere in Form eines Videoencoders, auszubilden. Dies hat den besonderen Vorteil, dass handelsübliche Bausteine in diese Anordnung übernommen werden können.

An der Ausgangsseite des Übertragungskanals kann ein Signaltrennungselement angeordnet werden. Dieses Signaltrennungselement sollte passend zu dem an der Eingangsseite des Übertragungskanals angeordneten Signalverbindungselement ausgebildet sein. Das Signaltrennungselement kann die Daten aus dem Übertragungskanal reorganisieren und stellt das Kontrollsignal und das Bilddatensignal wieder getrennt zur Verfügung. Die Ausbildung des Signaltrennungselements ist ebenfalls grundsätzlich beliebig. Besonders geeignet ist auch hier die Ausbildung des Signaltrennungselements in Form eines zum Signalverbindungselement kompatiblen integrierten Schaltkreises, insbesondere in Form eines Videodecoders.

Die eigentliche Übertragung des Bilddatensignals und des Kontrollsignals über den Übertragungskanal ist grundsätzlich ohne Belang. Von besonderem Vorteil ist es aber, wenn Bilddatensignale und Kontrollsignale abschnittsweise alternierend über den Übertragungskanal übertragbar sind. Dann nämlich ist die eindeutige Zusammengehörigkeit von Bilddatensignal und Kontrollsignal durch die zeitlich verschachtelte Übertragung sichergestellt. Eine Form dieser alternierenden Datenübertragung ist die Übertragung des Kontrollsignals innerhalb des Vertical Blank Intervalls.

Dabei kann auf einen bekannten Übertragungsstandard für die Übertragung von Informationen während des Vertical Blank Intervalls, wie z.B. Close Captioning, Wide Screen Signaling (WSS), Copy Generation Management-System (CGMS) und Video Programming System (VPS), zurückgegriffen werden.

Der Teletextübertragungsstandard ist ein weiterer Übertragungsstandard, der das Vertical Blank Intervall nutzt. Besonders vorteilhaft ist es, das Kontrollsignal in einer Form des Teletextübertragungsstandards oder einer diesem Übertragungsstandard ähnlichen Form über den Übertragungskanal zu übertragen. Dabei können die in den verschiedenen Teletextformaten (US-Teletext, World Standard Teletext (WST), Euro WST, PAL WST, NTSC WST, CCST, Videotext, Telidon, NABTS) übertragenen Daten zur Identifikation der korrespondierenden Bilddatensignalquelle verwendet oder ergänzt werden. Besonders vorteilhaft an einer solchen Ausführungsform ist die Möglichkeit, vorhandene Hardwarebausteine benutzen zu können.

Eine Ausführungsform der Erfindung ist in den Zeichnungen schematisch dargestellt und wird nachfolgend beispielhaft erläutert.

Es zeigen:
- **Fig. 1**: das Funktionsprinzip des erfindungsgemäßen Fahrzeugs in einer schematisch dargestellten Ansicht;
- **Fig. 2**: die Datenflüsse zwischen den einzelnen Komponenten des erfindungsgemäßen Fahrzeugs in einem schematisierten Datenflussdiagramm.

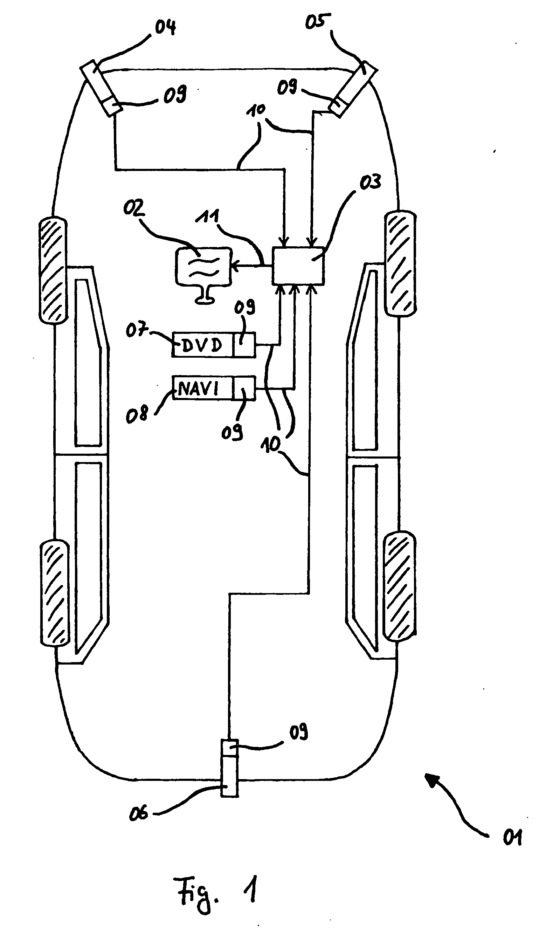

Das in **Fig. 1** dargestellte Fahrzeug 01 weist eine Bildanzeigeeinheit 02, eine Auswerteeinheit 03 und einige Bilddatensignalquellen auf. Die Bilddatensignalquellen sind in diesem Ausführungsbeispiel als Videokameras für den Front- und Seitenbereich 04, 05 und als Rückfahrkamera 06 ausgebildet. Des Weiteren verfügt das Fahrzeug über ein DVD-Abspielgerät 07 und ein Navigationssystem 08. Sämtliche Bilddatensignalquellen 04, 05, 06, 07, 08 sind mit einem Signalgenerator 09 zur Erzeugung des Kontrollsignals ausgestattet. Die Bilddatensignale und Kontrollsignale werden jeweils über einen Übertragungskanal 10 an die Auswerteeinheit 03 übertragen. Das Ergebnis der Auswertung in der Auswerteeinheit 03 wird in Form eines Ergebnissignals 11 an die Bildanzeigeeinheit übertragen.

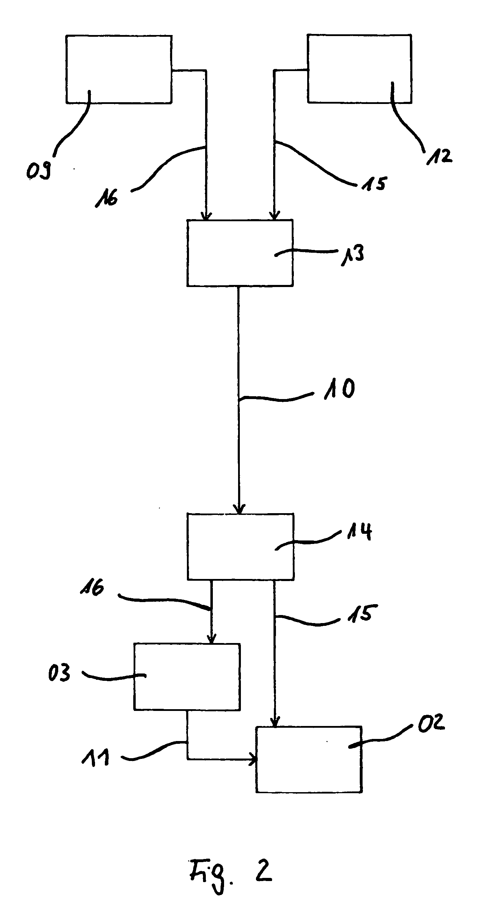

**Fig. 2** enthält eine schematische Darstellung der Datenflüsse zwischen den einzelnen Komponenten des Fahrzeugs. Das Fahrzeug weist eine beliebige Bilddatensignalquelle 12, einen Signalgenerator 09, ein Signalverbindungselement 13, ein Signaltrennungselement 14, eine Auswerteeinheit 03 und eine Bildanzeigeeinheit 02 auf. Das von der Bilddatensignalquelle 12 erzeugte Bilddatensignal 15 und das von dem Signalgenerator 09 erzeugte Kontrollsignal 16 wird mittels des Signalverbindungselements 13 für die Übertragung über den Übertragungskanal 10 vorbereitet und mittels des Signaltrennungselements 14 wieder zur Verfügung gestellt. In diesem Ausführungsbeispiel wird das Kontrollsignal 16 an die Auswerteeinheit 03 weitergeleitet. Das Ergebnis der Auswertung in der Auswerteeinheit 03 wird in Form eines Ergebnissignals 11 an die Bildanzeigeeinheit 02 übertragen. Das von dem Signaltrennungselement 14 wieder zur Verfügung gestellte Bilddatensignal 15 wird in diesem Ausführungsbeispiel direkt an die Bildanzeigeeinheit 02 übertragen.

## Patentansprüche

1. Fahrzeug (01) mit zumindest einer Bildanzeigeeinheit (02) und zumindest einer Bilddatensignalquelle (04,05,06,07,08), wobei die Bildanzeigeeinheit 02 mit der Bilddatensignalquelle (04,05,06,07,08) über zumindest einen Übertragungskanal (10) verbunden ist,
**dadurch gekennzeichnet,**
**dass** die Bilddatensignalquelle (04,05,06,07,08) über zumindest einen Signalgenerator (09) verfügt, wobei der Signalgenerator (09) ein Kontrollsignal (16) erzeugt, das über den Übertragungskanal (10) übertragbar ist, wobei die im Kontrollsignal enthaltene Information eine Identifizierung der Bilddatensignalquelle (04,05,06,07,08) ermöglichen, und wobei das Kontrollsignal (16) in einer Auswerteeinheit (03) empfangen und zur Identifizierung der Bilddatensignalquelle (04,05,06,07,08) ausgewertet werden kann.

2. Fahrzeug nach Anspruch 1,
**dadurch gekennzeichnet,**
**dass** die Bildanzeigeeinheit (02) als Monitor und/oder als Display, insbesondere als Flachbildschirm, ausgebildet ist.

3. Fahrzeug nach Anspruch 1 oder 2,
**dadurch gekennzeichnet,**
**dass** die im Kontrollsignal (16) enthaltene Information auf der Bildanzeigeeinheit (02) darstellbar ist.

4. Fahrzeug nach einem der Ansprüche 1 bis 3,
**dadurch gekennzeichnet,**
**dass** die Bilddatensignalquelle aus zumindest einer Videokamera besteht.

5. Fahrzeug nach Anspruch 4,
**dadurch gekennzeichnet,**
**dass** die Videokamera, insbesondere eine Rückfahrkamera (06), Bildaufnahmen eines von der Position des Fahrers zumindest unvollständig einsehbaren Bereiches akquiriert.

6. Fahrzeug nach einem der Ansprüche 1 bis 3,
**dadurch gekennzeichnet,**
**dass** die Bilddatensignalquelle in Form eines Wiedergabegerätes, insbesondere eines DVD-Abspielgerätes (07), ausgebildet ist.

7. Fahrzeug nach einem der Ansprüche 1 bis 3,
**dadurch gekennzeichnet,**
**dass** die Bilddatensignalquelle in Form eines Navigationssystems (08) ausgebildet ist.

8. Fahrzeug nach einem der Ansprüche 1 bis 3,
dadurch gekennzeiehnet,
dass die Bilddatensignalquelle in Form eines Fernsehempfängers ausgebildet ist.

9. Fahrzeug nach einem der Ansprüche 1 bis 8,
**dadurch gekennzeichnet,**
**dass** ein Bilddatensignal (15) und/oder ein Kontrollsignal (16) über den Übertragungskanal (10) kontaktbehaftet, insbesondere durch elektrischen Strom, übertragbar ist.

10. Fahrzeug nach einem der Ansprüche 1 bis 8,
**dadurch gekennzeichnet,**
**dass** ein Bilddatensignal (15) und/oder ein Kontrollsignal (16) über den Übertragungskanal (10) kontaktlos, insbesondere durch elektromagnetische Wellen, übertragbar ist.

11. Fahrzeug nach einem der Ansprüche 1 bis 10,
**dadurch gekennzeichnet,**
**dass** ein Bilddatensignal (15) und/oder ein Kontrollsignal (16) zumindest über den Übertragungskanal (10) verschlüsselt übertragbar ist.

12. Fahrzeug nach einem der Ansprüche 1 bis 11,
**dadurch gekennzeichnet,**
**dass** das vom Signalgenerator (09) erzeugte Kontrollsignal (16) dem Bilddatensignal (15) einer Bilddatensignalquelle (04,05,06,07,08) eindeutig zuordenbar ist.

13. Fahrzeug nach einem der Ansprüche 1 bis 12,
**dadurch gekennzeichnet,**
**dass** der Signalgenerator (09) in die zugeordnete Bilddatensignalquelle (04,05,06,07,08) integriert ist.

14. Fahrzeug nach einem der Ansprüche 1 bis 13,
**dadurch gekennzeichnet,**
**dass** mittels der Auswerteinheit (03) das Anliegen eines Kontrollsignals (16) an der Auswerteeinheit (03), insbesondere eines erwarteten Kontrollsignals, überprüfbar ist.

15. Fahrzeug nach einem der Ansprüche 1 bis 14,
**dadurch gekennzeichnet,**
**dass** das Ergebnis der Auswertung der Auswerteeinheit (03) in Form eines Ergebnissignals (11) an die Bildanzeigeeinheit (02) übertragbar ist, wobei die Signaldarstellung der Bildanzeigeeinheit (02) mittels des Ergebnissignals (11) beeinflussbar ist.

16. Fahrzeug nach einem der Ansprüche 1 bis 15,
**dadurch gekennzeichnet,**
**dass** die Auswerteeinheit (03) in die Bildanzeigeeinheit (02) integriert ist.

17. Fahrzeug nach einem der Ansprüche 1 bis 16,
**dadurch gekennzeichnet,**
**dass** ein Bilddatensignal (15) und/oder Kontrollsignal (16) über den Übertragungskanal (10) in einer Form des FBAS-Übertragungsstandards oder einer diesem Übertragungsstandard ähnlichen Form übertragbar ist.

18. Fahrzeug nach einem der Ansprüche 1 bis 17,
**dadurch gekennzeichnet,**
**dass** zwischen Bilddatensignalquelle (04,05,06,07,08) und Signalgenerator (09) und Übertragungskanal (10) ein Signalverbindungselement (13) angeordnet ist.

19. Fahrzeug nach Anspruch 18,
**dadurch gekennzeichnet,**
**dass** das Signalverbindungselement (13) in Form eines integrierten Schaltkreises, insbesondere in Form eines Videoencoders, ausgebildet ist.

20. Fahrzeug nach einem der Ansprüche 1 bis 19,
**dadurch gekennzeichnet,**
**dass** zwischen Bildanzeigeeinheit (02) und Übertragungskanal (10) ein Signaltrennungselement (14) angeordnet ist.

21. Fahrzeug nach Anspruch 20,
**dadurch gekennzeichnet,**
**dass** das Signaltrennungselement (14) in Form eines integrierten Schaltkreises, insbesondere in Form eines Videodecoders, ausgebildet ist.

22. Fahrzeug nach einem der Ansprüche 1 bis 21,
**dadurch gekennzeichnet,**
**dass** Bilddatensignale (15) und Kontrollsignale (16) abschnittsweise alternierend über den Übertragungskanal (10) übertragbar sind.

23. Fahrzeug nach Anspruch 22,
**dadurch gekennzeichnet,**
**dass** das Kontrollsignal (16) innerhalb des Vertical Blank Intervall übertragbar ist.

24. Fahrzeug nach einem der Ansprüche 1 bis 23,
**dadurch gekennzeichnet,**
**dass** das Kontrollsignal (16) über den Übertragungskanal (10) in einer Form des Teletextübertragungsstandards oder einer diesem Übertragungsstandard ähnlichen Form übertragbar ist.

## Claims

1. Vehicle (01) having at least one image display unit (02) and at least one image data signal source (04, 05, 06, 07, 08), wherein the image display unit (02) is connected to the image data signal source (04, 05, 06, 07, 08) by means of at least one transmission channel (10),
**characterized**
**in that** the image data signal source (04, 05, 06, 07, 08) has at least one signal generator (09), wherein the signal generator (09) produces a control signal (16) that can be transmitted via the transmission channel (10), wherein the information contained in the control signal allows identification of the image data signal source (04, 05, 06, 07, 08), and wherein the control signal (16) can be received in an evaluation unit (03) and evaluated for the purpose of identifying the image data signal source (04, 05, 06, 07, 08).

2. Vehicle according to Claim 1,
**characterized**
**in that** the image display unit (02) is in the form of a monitor and/or in the form of a display, particularly in the form of a flat screen.

3. Vehicle according to Claim 1 or 2,
**characterized**
**in that** the information contained in the control signal (16) can be presented on the image display unit (02).

4. Vehicle according to one of Claims 1 to 3,
**characterized**
**in that** the image data signal source comprises at least one video camera.

5. Vehicle according to Claim 4,
**characterized**
**in that** the video camera, particularly a reversing camera (06), acquires photographs of an area that is at least incompletely visible from the position of the driver.

6. Vehicle according to one of Claims 1 to 3,
**characterized**
**in that** the image data signal source is in the form of a reproduction appliance, particularly a DVD player (07).

7. Vehicle according to one of Claims 1 to 3,
**characterized**
**in that** the image data signal source is in the form of a navigation system (08).

8. Vehicle according to one of Claims 1 to 3,
**characterized**
**in that** the image data signal source is in the form of a television receiver.

9. Vehicle according to one of Claims 1 to 8,
**characterized**
**in that** an image data signal (15) and/or a control signal (16) can be transmitted via the transmission channel (10) in contact-based fashion, particularly by electric current.

10. Vehicle according to one of Claims 1 to 8,
**characterized**
**in that** an image data signal (15) and/or a control signal (16) can be transmitted via the transmission channel (10) contactlessly, particularly by electromagnetic waves.

11. Vehicle according to one of Claims 1 to 10,
**characterized**
**in that** an image data signal (15) and/or a control signal (16) can be transmitted at least via the transmission channel (10) in encrypted form.

12. Vehicle according to one of Claims 1 to 11,
**characterized**
**in that** the control signal (16) produced by the signal generator (09) can be explicitly associated with the image data signal (15) from an image data signal source (04, 05, 06, 07, 08).

13. Vehicle according to one of Claims 1 to 12,
**characterized**
**in that** the signal generator (09) is integrated in the associated image data signal source (04, 05, 06, 07, 08).

14. Vehicle according to one of Claims 1 to 13,
**characterized**
**in that** the evaluation unit (03) can be used to check the presence of a control signal (16) from the evaluation unit (03), particularly of an expected control signal.

15. Vehicle according to one of Claims 1 to 14,
**characterized**
**in that** the result of the evaluation in the evaluation unit (03) can be transmitted to the image display unit (02) in the form of a result signal (11), wherein the signal presentation on the image display unit (02) can be influenced by means of the result signal (11).

16. Vehicle according to one of Claims 1 to 15,
**characterized**
**in that** the evaluation unit (03) is integrated in the image display unit (02).

17. Vehicle according to one of Claims 1 to 16,
**characterized**
**in that** an image data signal (15) and/or control signal (16) can be transmitted via the transmission channel (10) in a form of the CVBS transmission standard or in a form similar to this transmission standard.

18. Vehicle according to one of Claims 1 to 17,
**characterized**
**in that** the image data signal source (04, 05, 06, 07, 08) and the signal generator (09) and the transmission channel (10) have a signal connection element (13) arranged between them.

19. Vehicle according to Claim 18,
**characterized**
**in that** the signal connection element (13) is in the form of an integrated circuit, particularly in the form of a video encoder.

20. Vehicle according to one of Claims 1 to 19,
**characterized**
**in that** the image display unit (02) and the transmission channel (10) have a signal isolation element (14) arranged between them.

21. Vehicle according to Claim 20,
**characterized**
**in that** the signal isolation element (14) is in the form of an integrated circuit, particularly in the form of a video decoder.

22. Vehicle according to one of Claims 1 to 21,
**characterized**
**in that** image data signals (15) and control signals (16) can be transmitted in sections alternately via the transmission channel (10).

23. Vehicle according to Claim 22,
**characterized**
**in that** the control signal (16) can be transmitted within the vertical blanking interval.

24. Vehicle according to one of Claims 1 to 23,
**characterized**
**in that** the control signal (16) can be transmitted via the transmission channel (10) in a form of the teletext transmission standard or a form similar to this transmission standard.

## Revendications

1. Véhicule (01) doté d'au moins une unité d'affichage d'image (02) et d'au moins une source de signal d'image de données (04, 05, 06, 07, 08), l'unité d'affichage d'image 02 étant reliée à la source de signal d'image de données (04, 05, 06, 07, 08) par le biais d'au moins un canal de transmission (10), **caractérisé en ce que** la source de signal d'image de données (04, 05, 06, 07, 08) dispose d'au moins un générateur de signal (09), ledit générateur de signal (09) produisant un signal de contrôle (16) pouvant être transmis via le canal de transmission (10), les informations contenues dans le signal de contrôle permettant d'identifier la source de signal d'image de données (04, 05, 06, 07, 08) et le signal de contrôle (16) pouvant être reçu dans une unité d'analyse (03) et analysé pour identifier la source de signal d'image de données (04, 05, 06, 07, 08).

2. Véhicule selon la revendication 1, **caractérisé en ce que** l'unité d'affichage d'image (02) prend la forme d'un moniteur et/ou d'un écran, notamment d'un écran plat.

3. Véhicule selon la revendication 1 ou 2, **caractérisé en ce que** les informations contenues dans le signal de contrôle (16) peuvent être représentées sur l'unité d'affichage d'image (02).

4. Véhicule selon l'une quelconque des revendications 1 à 3, **caractérisé en ce que** la source de signal d'image de données se compose d'au moins une caméra vidéo.

5. Véhicule selon la revendication 4, **caractérisé en ce que** la caméra vidéo, notamment une caméra de marche arrière (06), acquiert les clichés d'une zone ne pouvant au moins pas être entièrement vue depuis la position du conducteur.

6. Véhicule selon l'une quelconque des revendications 1 à 3, **caractérisé en ce que** la source de signal d'image de données prend la forme d'un appareil de retransmission, notamment d'un appareil de lecture de DVD (07).

7. Véhicule selon l'une quelconque des revendications 1 à 3, **caractérisé en ce que** la source de signal d'image de données prend la forme d'un système de navigation (08).

8. Véhicule selon l'une quelconque des revendications 1 à 3, **caractérisé en ce que** la source de signal d'image de données prend la forme d'un récepteur de télévision.

9. Véhicule selon l'une quelconque des revendications 1 à 8, **caractérisé en ce qu'**un signal d'image de données (15) et/ou un signal de contrôle (16) peuvent être transmis via le canal de transmission (10) par contact, notamment par le courant électrique.

10. Véhicule selon l'une quelconque des revendications 1 à 8, **caractérisé en ce qu'**un signal d'image de données (15) et/ou un signal de contrôle (16) peuvent être transmis via le canal de transmission (10) sans contact, notamment par le biais d'ondes électromagnétiques.

11. Véhicule selon l'une quelconque des revendications 1 à 10, **caractérisé en ce qu'**un signal d'image de données (15) et/ou un signal de contrôle (16) peuvent au moins être transmis de façon codée par le biais du canal de transmission (10).

12. Véhicule selon l'une quelconque des revendications 1 à 11, **caractérisé en ce que** le signal de contrôle (16) produit par le générateur de signal (09) peut être associé de façon univoque au signal d'image de données (15) d'une source de signal d'image de données (04, 05, 06, 07, 08).

13. Véhicule selon l'une quelconque des revendications 1 à 12, **caractérisé en ce que** le générateur de signal (09) est intégré dans la source de signal d'image de données (04, 05, 06, 07, 08) associée.

14. Véhicule selon l'une quelconque des revendications 1 à 13, **caractérisé en ce que** la présence d'un signal de contrôle (16), notamment d'un signal de contrôle attendu, peut être contrôlée au niveau de l'unité d'analyse (03) à l'aide de l'unité d'analyse (03).

15. Véhicule selon l'une quelconque des revendications 1 à 14, **caractérisé en ce que** le résultat de l'analyse de l'unité d'analyse (03) peut être transmis à l'unité d'affichage d'image (02) sous la forme d'un signal de résultat (11), la représentation de signal de l'unité d'affichage d'image (02) pouvant être influencée par le signal de résultat (11).

16. Véhicule selon l'une quelconque des revendications 1 à 15, **caractérisé en ce que** l'unité d'analyse (03) est intégrée dans l'unité d'affichage d'image (02).

17. Véhicule selon l'une quelconque des revendications 1 à 16, **caractérisé en ce qu'**un signal d'image de données (15) et/ou un signal de contrôle (16) peuvent être transmis via le canal de transmision (10) sous la forme d'une norme de transmission CVBS ou d'une norme de transmission similaire.

18. Véhicule selon l'une quelconque des revendications 1 à 17, **caractérisé en ce qu'**un élément de liaison de signal (13) est disposé entre la source de signal d'image de données (04, 05, 06, 07, 08) et le générateur de signal (09) et le canal de transmission (10).

19. Véhicule selon la revendication 18, **caractérisé en ce que** l'élément de liaison de signal (13) prend la forme d'un circuit de connexion intégré, notamment d'un codeur vidéo.

20. Véhicule selon l'une quelconque des revendications 1 à 19, **caractérisé en ce qu'**un élément de séparation du signal (14) est disposé entre l'unité d'affichage d'image (02) et le canal de transmission (10).

21. Véhicule selon la revendication 20, **caractérisé en ce que** l'élément de séparation du signal (14) prend la forme d'un circuit de connexion intégré, notamment d'un décodeur vidéo.

22. Véhicule selon l'une quelconque des revendications 1 à 21, **caractérisé en ce que** les signaux d'image de données (15) et les signaux de contrôle (16) peuvent être transmis en partie de façon alternée via le canal de transmission (10).

23. Véhicule selon la revendication 22, **caractérisé en ce que** le signal de contrôle (16) peut être transmis pendant l'intervalle de suppression de trame.

24. Véhicule selon l'une quelconque des revendications 1 à 23, **caractérisé en ce que** le signal de contrôle (16) peut être transmis via le canal de transmission (10) sous la forme de la norme de transmission de télétexte ou sous une forme similaire à cette norme de transmission.
